# EUROPÄISCHE PATENTSCHRIFT

(11) **EP 0 852 610 B1**
(45) Veröffentlichungstag und Bekanntmachung des Hinweises auf die Patenterteilung: **26.05.1999**
(21) Anmeldenummer: 96933401.0
(22) Anmeldetag: 26.09.1996
(51) Int. Cl.: C09D 151/08, C08F 283/12

(54) **VORVERNETZTE SILICONELASTOMER-PARTIKEL MIT ORGANOPOLYMERHÜLLE ALS FORMULIERUNGSBESTANDTEIL IN PULVERLACKEN**
PRECROSS-LINKED SILICONE ELASTOMER PARTICLES WITH ORGANOPOLYMER SHELL AS FORMULATION CONSTITUENT IN POWDER COATING MATERIALS
PARTICULES EN ELASTOMERE DE SILICONE PRERETICULEES POURVUES D'UNE ENVELOPPE DE POLYMERE ORGANIQUE, UTILISEES COMME CONSTITUANTS DE FORMULATION DANS DES PEINTURES EN POUDRE

(30) Priorität: 26.09.1995 DE 19535824
(43) Veröffentlichungstag der Anmeldung: 15.07.1998
(73) Patentinhaber: Wacker-Chemie GmbH, 81737 München (DE)
(72) Erfinder: GECK, Michael, D-84489 Burghausen (DE); GOEBLMEIER, Walter, D-84329 Wurmannsquick (DE); DEUBZER, Bernward, D-84489 Burghausen (DE); PATRICK, Ekkehard, D-84508 Burgkirchen (DE)
(74) Vertreter: Rimböck, Karl-Heinz, Dr.
(86) Internationale Anmeldenummer: EP9604208
(87) Internationale Veröffentlichungsnummer: WO9712005

(56) Entgegenhaltungen:
- EP-A- 0 217 257
- EP-A- 0 275 051

## Beschreibung

Die Erfindung betrifft die Verwendung von vorvernetzten Siliconelastomer-Partikeln mit Organopolymerhülle als Formulierungsbestandteil in Pulverlacken, sowie Pulverlack-Zusammensetzungen auf der Basis von thermoplastischen oder duroplastischen Bindemitteln mit vorvernetzten Siliconelastomer-Partikel mit Organopolymerhülle.

Pulverlacke bestehen aus festen Bindemitteln auf der Basis von thermoplastischen oder duromeren Kunststoffen wie Epoxid-, Polyurethan-, Acryl- oder Polyesterharzen, Pigmenten und weiteren Additiven wie beispielsweise Vernetzungskatalysatoren. Diese Zusammensetzungen werden in Pulverform auf vorwiegend metallische Substrate aufgetragen. Die angeführten thermoplastischen oder duromeren Bindemittel sind generell hart, aber spröde; für die Verbesserung der Lackeigenschaften ist daher häufig eine Zähmodifizierung der Polymersysteme erforderlich.

Um gute Schlagzähigkeiten bei gleichzeitigem Erhalt der bestehenden, gewünschten Polymereigenschaften wie Härte, Formbeständigkeit und mechanische Festigkeit zu erzielen, muß der Zähmodifier in Form separater, diskreter Mikrophasen mit optimierter Partikelgröße und -form in die Thermoplast- bzw. Duromersysteme eingebaut werden. Dies ist in kontrollierter und reproduzierbarer Weise nur realisierbar, indem der Zähmodifier in Form von Partikeln mit definierter Partikelgröße und Partikelgrößenverteilung als Blendkomponente eingesetzt wird. Weiterhin muß eine gute Verträglichkeit des partikÜlären Modifiers mit der Polymermatrix gegeben sein. Dann werden die Domänengrößen der Modifierphase über den Partikeldurchmesser exakt definiert. Nur bei vollständiger Phasenseparation tritt keine unerwünschte Weichmachung der Polymermatrix auf, die einen Verlust bzw. eine negative Beeinflußung der Eigenschaften der Polymermatrix wie Härte, Formbeständigkeit und mechanische Festigkeit zur Folge hätte.

Silicone sind als Modifier für Thermoplasten oder Duromere bekannt und von besonderem Interesse, da diese nicht nur die Schlagzähigkeit erhöhen, sondern auch Tieftemperaturflexibilität, Witterungsbeständigkeit, Beständigkeit gegen Temperaturwechselbeanspruchung und chemische Beständigkeit von thermoplastischen und duromeren Organopolymer-Systemen verbessern. Allgemein von Nachteil ist allerdings die prinzipielle Unverträglichkeit von Siliconen mit Organopolymeren. Durch diese Unverträglichkeit ergeben sich bei der Verwendung von Siliconölen und -harzen als Zusätze zu Bindemitteln für Pulverlacke generell Verarbeitungsprobleme, wie Kontamination in den Misch- und Extrudiervorrichtungen. Bei der Anwendung können Verlaufsstörungen auftreten, durch Migration der Silicone werden Haftungsprobleme und Probleme bei der Überlackierbarkeit hervorgerufen.

In der US-A 5280098 werden epoxyfunktionelle Siliconharze als alleiniges Bindemittel bzw. als Bindemittelbestandteil in Kombination mit organischen Harzen zur Formulierung von Pulverlacken beschrieben. Durch die Einführung der Epoxidgruppen soll die Elastizität und die Kompatibilität mit dem organischen Harz verbessert werden. Das Konzept der kontrollierten Mikrophasenseparation ist mit den epoxyfunktionellen Siliconharzen nicht realisierbar, da diese keine partikuläre Struktur mit definiertem Partikeldurchmesser aufweisen.

In der US-A 5227435 wird vorgeschlagen, in Pulverlacken das Polyester-Bindemittel durch siliconmodifizierte Polyester zu substituieren, welche durch Kondensation von OH-funktionellen Siloxanen mit Glykol, anschließender Veresterung mit Carbonsäuren und Umsetzung mit Anhydriden erhalten werden. Die EP-A 275051 betrifft unter anderem mit Acrylat gepfropfte Siliconharze, welche als Bindemittel für Pulverlacke mit verbessertem Eigenschaftsprofil der damit erhältlichen Beschichtungsfilme beschrieben werden.

Nachteilig bei der Vorgehensweise gemäß US-A 5227435 und EP-A 275051 ist, daß die darin beschriebenen Siliconcopolymere als Bindemittel zum Ersatz der herkömmlichen Thermoplasten oder Duroplasten beschrieben werden. Folglich muß der Siliconbestandteil durch aufwendige chemische Reaktion in das jeweilige Polymersystem eingebaut werden, jedes spezifische Bindemittelsystem muß von Grund auf neu synthetisiert werden. Die silicontypischen Kontaminationsprobleme werden auch durch solche Bindemittelsysteme nicht ausgeschlossen. Eine kontrollierte Mikrophasenseparation ist hier ebenfalls nicht gegeben, da es sich wiederum nicht um Modifier mit partikulärer Struktur handelt.

Die EP-A 217257 betrifft mit Organopolymer gepfropfte Diorganosiloxanpolymerisate, die unvernetzt oder vernetzt sein können. Diese Pulver werden per se verarbeitet und nicht als Additive eingesetzt. Bei der Verarbeitung mittels Walzen, Kalandrierung und Kneten werden gummielastische Kautschukmassen erhalten, aber keine pulverförmigen Lackzusammensetzungen auf der Basis von Thermoplast- oder Duroplast-Pulver.

Es bestand daher die Aufgabe, Pulverlack-Zusammensetzungen auf der Grundlage herkömmlicher thermoplastischer oder duroplastischer Bindemittel zur Verfügung zu stellen, welche verbesserte Schlagzähigkeit und Witterungsbeständigkeit aufweisen, bei gleichzeitigem Erhalt der bestehenden, gewünschten Polymereigenschaften des Bindemittels wie Härte, Formbeständigkeit und mechanische Festigkeit.

Überraschenderweise konnte diese Aufgabe durch die Verwendung von vorvernetzten Siliconelastomer-Partikeln mit Organopolymerhülle als Formulierungsbestandteil in Pulverlacken auf der Basis von thermoplastischen oder duroplastischen Bindemitteln gelöst werden.

Gegenstand der Erfindung ist die Verwendung von vorvernetzten Siliconelastomer-Partikeln mit Organopolymerhülle als Formulierungsbestandteil in Pulverlack-Zusammensetzungen auf der Basis von thermoplastischen oder duroplastischen Bindemitteln, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ·(RSiO_{3/2})_{y}·(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl-oder Alkenyl-Reste mit 1 bis 6 C-Atomen, Aryl-Reste oder substituierte Kohlenwasserstoffreste bedeutet.

Ein weiterer Gegenstand der Erfindung sind Pulverlack-Zusammensetzungen auf der Basis von thermoplastischen oder duroplastischen Bindemitteln, welche als Formulierungsbestandteil vorvernetzte Siliconelastomer-Partikel mit Organopolymerhülle enthalten, wobei die Siliconelastomer-Partikel
a) 5 bis 95 Gew%, bezogen auf das Gesamtgewicht des Copolymerisats, eines Kernpolymeren der allgemeinen Formel (R₂SiO_{2/2})ₓ·(RSiO_{3/2})_{y}·(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl-oder Alkenyl-Reste mit 1 bis 6 C-Atomen, Aryl-Reste oder substituierte Kohlenwasserstoffreste bedeutet.

Die als Formulierungsbestandteil eingesetzten Siliconelastomer-Partikel mit Organopolymerhülle sowie Verfahren zu deren Herstellung sind in der EP-A 492376 (US-A 5223586) beschrieben. Vorvernetzte Siliconelastomer-Partikel bedeutet, daß diese über (RSiO_{3/2})- und (SiO_{4/2})-Einheiten vernetzt sind.

Die Siliconelastomer-Partikel mit Organopolymerhülle enthalten vorzugsweise
a) 20 bis 80 Gew%, bezogen auf das Copolymer-Gesamtgewicht, eines Kernpolymeren (R₂SiO_{2/2})ₓ·(RSiO_{3/2})_{y}·(SiO_{4/2})_{z} mit x = 50 bis 99 Mol%, y = 1 bis 50 Mol%; z = 0 bis 20 Mol%; und
b) 20 bis 80 Gew%, bezogen auf das Copolymer-Gesamtgewicht, einer Hülle aus Organopolymer ein- oder mehrfach ethylenisch ungesättigter Monomere,
wobei R die obengenannte Bedeutung hat.

Die feinteiligen Pfropfcopolymerisate haben vorzugsweise einen mittleren Teilchendurchmesser von 10 bis 300 nm, besonders bevorzugt von 30 bis 150 nm. Die Teilchengrößen können im obengenannten Bereich schwanken, vorzugsweise liegt eine monomodale Teilchengrößenverteilung mit einem Polydispersitätsindex von maximal σ₂ = 0.2 vor.

Vorzugsweise sind die Reste R Alkylreste wie der Methyl-, Ethyl-, n-Propyl-, Isopropyl-, n-Butyl-, sec.-Butyl-, Amyl-, Hexylrest; Alkenylreste wie der Vinyl-, Allyl-, Butenyl- und 1-Hexenylrest; Arylreste wie der Phenylrest; oder substituierte Kohlenwasserstoffreste, wie halogenierte Kohlenwasserstoffreste, Mercaptoalkylreste, Cyanoalkylreste, Aminoalkylreste, Acyloxyalkylreste, Hydroxyalkylreste.

Besonders bevorzugt sind die Reste Methyl, Ethyl, Propyl, Phenyl, Vinyl, Allyl, 1-Hexenyl, 3-Methacryloxypropyl und 3-Mercaptopropyl, wobei weniger als 30 Mol% der Reste im Siloxanpolymerisat Vinyl-, 3-Methacryloxypropyl oder 3-Mercaptopropylgruppen sind.

Als Monomere für den organischen Polymeranteil b) werden vorzugsweise Acrylsäureester oder Methacrylsäureester sowie Mono- und Diester der Fumar- und Maleinsäure von aliphatischen Alkoholen und Diolen mit 1 bis 10 C-Atomen, Acrylsäure- und Methacrylsäureamide, Acrylnitril, Styrol, p-Methylstyrol, α-Methylstyrol, Divinylbenzol, Vinylacetat, Vinylpropionat, Maleinimid, Vinylchlorid, Mono- und Divinylether, Ethylen, Butadien, Isopren und Chloropren eingesetzt. Besonders bevorzugt sind Styrol sowie Acrylsäureester und Methacrylsäureester von aliphatischen Alkoholen mit 1 bis 4 C-Atomen, beispielsweise Methyl(meth)acrylat, Butyl(meth)-acrylat und Glycidyl(meth)acrylat. Als organischer Polymeranteil sind sowohl Homopolymerisate als auch Mischpolymerisate der genannten Monomere geeignet.

Die Herstellung der Polysiloxan-Pfropfgrundlage erfolgt nach dem Emulsionspolymerisationsverfahren durch Zudosieren des entsprechenden Gemisches monomerer Silane vom Typ RₐSi(OR')₄₋ₐ, wobei a = 0, 1 oder 2 ist, oder gegebenenfalls niedermolekularer Siloxane der allgemeinen Formel (R₂SiO)ₙ mit n = 3 bis 8, zu einer bewegten Emulgator/Wasser-Mischung. Der Rest R hat die bereits genannten Bedeutungen. R' steht für Alkylreste mit 1 bis 6 C-Atomen, Arylreste oder substituierte Kohlenwasserstoffreste, bevorzugt sind Methyl-, Ethyl- und Propylrest. Das Silan oder das Silan- bzw. Silan/Siloxan-Gemisch wird dosiert zugegeben. Die Emulsionspolymerisation wird bei einer Temperatur von 30 bis 90°C, vorzugsweise 60 bis 85°C, und vorzugsweise bei Normaldruck durchgeführt. Der pH-Wert der Polymerisationsmischung beträgt von 1 bis 4, vorzugsweise von 2 bis 3.

Beispiele geeigneter Silane sind für Silane der allgemeinen Formel R₂Si(OR')₂ Dimethyldiethoxysilan oder Dimethyldimethoxysilan, für Oligomeren der Formel (R₂SiO)ₙ mit n = 3 bis 8 Octamethylcyclotetrasiloxan oder Hexamethylcyclotrisiloxan, für Silane der allgemeinen Formel RSi(OR')₃ Methyltrimethoxysilan,Phenyltriethoxysilan, 3-Chlorpropyltrimethoxysilan, 3-Mercaptopropyltrimethoxysilan, oder Methacryloxypropyltrimethoxysilan, und für Silane der allgemeinen Formel Si(OR')₄ Tetramethoxysilan oder Tetraethoxysilan.

Im letzten Schritt des Herstellungsverfahrens werden die bereits genannten ethylenisch ungesättigten Monomere auf die Polysiloxanpfropfgrundlage aufgepfropft. Die Pfropfung erfolgt nach dem Emulsionspolymerisationsverfahren in Gegenwart von wasserlöslichen oder monomerlöslichen Radikalinitiatoren. Die Isolierung der Pfropfcopolymerisate aus der Emulsion kann nach bekannten Verfahren erfolgen. Beispielsweise durch Koagulation der Latices mittels Salzzugabe oder Zugabe von polaren Lösungsmitteln oder durch Sprühtrocknung.

Der Vernetzungsgrad des Siliconkerns bestimmt dabei dessen elastische Eigenschaften und kann durch geeignete Wahl der Ausgangskomponenten, entsprechende Alkoxysilane und/oder Siloxane zum Erhalt von (RSiO_{3/2})- bzw. (SiO_{4/2})-Einheiten, in dem Fachmann bekannter Weise gezielt eingestellt werden. Der Einbau von Silanbausteinen mit olefinisch ungesättigten Doppelbindungen , beispielsweise Vinyl- oder 3-Methacryloxypropylresten, gestattet in der nachfolgenden Pfropfpolymerisation eine chemische Anbindung der Organopolymerhülle an den Siliconkern durch kovalente Bindungen. Durch Wahl geeigneter Monomere für den Aufbau der organischen Polymerhülle b) können die Organopolymerhüllen gezielt maßgeschneidert werden. So kann durch Pfropfung einer Mischpolymerisat-Hülle, beispielsweise aus Methylmethacrylat (hohe Tg) und n-Butylacrylat (niedere Tg) auf einen vernetzten Siliconkern die Erweichungstemperatur der Polymerhülle gezielt eingestellt und damit den Erfordernissen bei der Verarbeitung, vor allem Extrudieren, der Pulverlack-Komponenten exakt angepaßt werden. Durch Pfropfung einer. Mischpolymerisat-Hülle, beispielsweise aus Methylmethacrylat und Glycidylmethacrylat, auf einen vernetzten Siliconkern kann durch die mit Glycidylmethacrylat eingeführten Epoxidfunktionen in der Organopolymerhülle zum einen eine Matrixanbindung zwischen Modifier-Partikel und Bindemittelharz der Pulverlack-Zusammensetzung erzielt werden, zum anderen können diese Modifier-Partikel als Vernetzer in Bindemitteln auf Polyesterharz-Basis wirken.

Am meisten bevorzugt werden demgemäß vernetzte Siliconelastomerpartikel mit einem Kern aus (R₂SiO_{2/2})ₓ · (RSiO_{3/2})_{y} mit x = 80 - 99 Mol% und y = 1 - 20 Mol%, wobei R gleich oder verschieden sein kann und die Bedeutung R = Methyl, 3-Methacryloxypropyl hat, und mit einer Hülle aus Poly(methylmethacrylat) oder Mischpolymerisat-Hüllen aus Methylmethacrylat und Butylacrylat bzw. Glycidylmethacrylat.

Der Anteil des Kernpolymeren, bezogen auf das Copolymergesamtgewicht beträgt besonders bevorzugt 50 - 75 Gew%, der Anteil der Organopolymer-Hülle somit besonders bevorzugt 25 - 50 Gew%. Dies entspricht einem Organopolymer-Pfropfgrad von 33 - 100 %.

Der Additivcharakter der Siliconelastomer-Partikel mit Organopolymerhülle und die einfache Einarbeitung durch Compoundieren gestatten den Einsatz mit allen gängigen Bindemittelsystemen für Pulverlacke. Beispiele für Bindemittelsysteme für Pulverlacke sind Epoxid-Harze, Epoxid-Novolak-Harze, Polyester-Harze, Epoxid-Polyester-Harze, Polyester-Hybrid-Harze, Polyacrylat-Harze, Polymethacrylat-Harze, Polyurethan-Harze, Polyethylenharze (HD-PE, LD-PE, LLD-PE), Polypropylenharze, Polyvinylchlorid-Harze, Ethylen/Vinylacetat-Mischpolymerisate, Polyamide und Celluloseester.

Im allgemeinen werden die Siliconelastomer-Partikel mit Organopolymerhülle in einer Menge von 0.5 bis 20 Gew%, vorzugsweise 1.0 bis 10 Gew%, jeweils bezogen auf das Gesamtgewicht von Siliconelastomer- und Bindemittel-Anteil, zugegeben.
Die Siliconelastomer-Partikel mit Organopolymer-Hülle können nach dem Vormischen mit Bindemittel, Pigmenten und weiteren Additiven wie bspw. Härter durch Extrudieren oder vergleichbare Mischverfahren in einem Temperaturbereich von 5 bis 160°C, vorzugsweise von 60 bis 110°C zu Pulverlacken verarbeitet werden. Dies entspricht den üblichen Verfahrensweisen zur Pulverlackherstellung. Zerkleinern, Mahlen und Sieben können nach dem Stand der Technik durchgeführt werden.

Im allgemeinen wird so vorgegangen, daß die Bindemittelkomponente vorzerkleinert wird und mit den Siliconelastomer-Partikeln, mit Pigmenten, Katalysatoren und Additiven beispielsweise in Fluidmischern intensiv vermischt wird. Das Gemenge gelangt über eine Dosiervorrichtung in einen Extruder, in dem das Material bei Temperaturen, die oberhalb des Erweichungspunktes des Bindemittels und unterhalb der Anspringtemperatur des Vernetzungskatalysators (Härters) liegen, aufgeschmolzen und homogenisiert wird. Das extrudierte, pastöse Material wird nach Austritt aus der Extruderdüse mit Walzen auf 2 bis 3 mm Schichtstärke ausgewalzt, gekühlt, zerkleinert und feingemahlen; abschließend wird das Pulver auf die gewünschte Kornfeinheit abgesiebt.

Die so erhältlichen Pulverlack-Zusammensetzungen lassen sich mit den für Pulverlacke bekannten Auftragsverfahren verarbeiten, beispielsweise durch elektrostatisches Spritzen, elektrostatisches Beschichten, Tribo- und Corona-Verfahren, Wirbelsintern, elektrostatisches Wirbelsintern, Schüttsintern und Zentrifugalgießen. Allen Sinterverfahren ist gemeinsam, daß das Material bei der Schichtbildung unter Wärmeeinfluß aufschmilzt; bei duromeren Kunststoffen schließt sich dann noch ein Aushärtezyklus an. Den elektrostatischen Auftragungsverfahren ist gemeinsam, daß das Pulver in der Regel auf einen geerdeten, kalten Grundwerkstoff aufgetragen wird. Die Pulverpartikel haften aufgrund ihrer elektrostatischen Ladung am Werkstück, das dann in einem Ofen erwärmt wird, wodurch die Partikel schmelzen und - im Falle härtbarer Kunststoffe - ausgehärtet werden.

Die erfindungsgemäße Pulverlack-Zusammensetzung eignet sich für alle Pulverlackanwendungen, beispielsweise Metallackierung im Automobilsektor (Klarlack, Decklack, Innenlack, Füller, Steinschlag- und Unterbodenschutz), von Schienenfahrzeugen und Flugzeugen (Außenlack), Haushaltsgeräten (z. B. Tiefkühltruhen, Kühlschränke, Geschirrspüler), Gebäudeteilen außen (Fensterrahmen, Fassadenverblendungen, Türen, Tore) und innen (Metallmöbel, Lampengehäuse), Fahrrädern, Schneemobilen, Containern, Schildern, Alufelgen.

In den erfindungsgemäßen Pulverlack-Zusammensetzungen wird das geforderte Kriterium der Mikrophasenseparation zur Verbesserung der Schlagzähigkeit in Thermoplasten und Duromeren bei gleichzeitigem Erhalt der bestehenden Polymereigenschaften wie Härte, Formbeständigkeit und mechanische Festigkeit erfüllt. Neben einer Verbesserung der (Tieftemperatur)-Schlagzähigkeit werden mit den Pulverlack-Zusammensetzungen beispielsweise noch verbesserte Glanzhaltung (Witterungsbeständigkeit) und Kratzfestigkeit erzielt, wobei Härte, Formbeständigkeit und mechanische Festigkeit nicht negativ beeinflußt werden. Die Siliconelastomer-Partikel mit Organopolymer-Hülle sind einfach und problemlos als Formulierungsbestandteile nach herkömmlichen Verfahrenstechniken in Pulverlack-Zusammensetzungen einarbeitbar (compoundierbar). Kontaminationsprobleme und Verlaufstörungen treten nicht auf. Die Überlackierbarkeit der resultierenden Pulverlacke ist gegeben.

Die Prüfergebnisse in den nachfolgenden Beispielen belegen, daß die (Schlag)Zähigkeit der Pulverlacke, auch bei tiefen Temperaturen, durch Zusatz von Siliconelastomer-Partikeln mit Organopolymer-Hülle verbessert wird, ohne daß Härte und Haftung der Pulverlacke nachteilig beeinflußt werden. Darüberhinaus wird noch die Witterungsbeständigkeit verbessert.

### Beispiele:

### Beispiele 1 - 2, Vergleichsbeispiel 1 (Tabelle 1):

Ein Carboxylgruppenhaltiger Polyesterpulverlack (Basis Uralac, Fa. DSM) wurde mit 10 Gew% (Beispiel 1), 3 Gew% (Beispiel 2) und 0 Gew% (Vergl.bsp. 1) an Siliconpartikeln mit einem Kern aus (R₂SiO_{2/2})ₓ · (R'SiO_{3/2})_{y} (x = 95 Mol%, y = 5 Mol%; R = Methyl, R'= Methyl, 3-Methacryloxypropyl) und einer Polymethylmethacrylat-Hülle (PMMA-Pfropfgrad 50 Gew%, Primärpartikelgröße 100 nm) vermischt, extrudiert (Extruder: MP 2000PC, Fa. APV-Baker) gemahlen, gesiebt und anschließend mit einer Pulverhandpistole (ESB Integral 2020, Fa. Wagner) auf Aluminium- bzw. Metallbleche aufgespritzt. Der Einbrennvorgang wurde 10 Minuten bei 200°C durchgeführt. Die Prüfergebnisse der Pulverlacke sind in Tabelle 1 zusammengefaßt.

Neben den in der Tabelle aufgeführten Prüfnormen wurden folgende Prüfmethoden angewendet:
Die Pendelhärte nach König wurde gemäß DIN 53137 geprüft. Der Reverse Impact wurde durch Kugelschlagprüfung mit dem Erichsen-Kugelschlag-Prüfgerät Typ 304 ermittelt.
Der Gitterschnitt wurde mit dem Verfahren gemäß DIN 53151 ermittelt.

Sie zeigen, daß die Zähigkeit (reverse impact) und Haftung (Gitterschnitt, Schwitzwasser-Klima) durch Zusatz des Siliconelastomer-Pulvers mit PMMA-Hülle verbessert werden; die Härte wird nicht nachteilig beeinflußt. Die Messungen des Glanzabfalls nach 2000 Stunden QUV-B-Bewitterung (Dreibereichsglanzmeßgerät Dr. Lange) ergaben für den Pulverlack aus Vergleichsbeispiel 1 im Vergleich mit dem Pulverlack aus Beispiel 1 einen um 200 % höheren Glanzabfall. Die Beständigkeit des Pulvers gegen QUV-B-Bewitterung wird durch Zusatz der Siliconelastomer-Partikel mit Organopolymer-Hülle ebenfalls verbessert.

### Beispiel 3:

Ein Acrylatpulverlack (Basis Alftalat, Fa. Hoechst) wurde mit 2 Gew%, 5 Gew% und 10 Gew% an Siliconpartikeln gemäß Beispiel 1 - 2 vermischt, extrudiert (Extruder: MP 2000PC, Fa. APV-Baker) gemahlen, gesiebt und anschließend mit einer Pulverhandpistole (ESB Integral 2020, Fa. Wagner) auf Aluminium- bzw. Metallbleche aufgespritzt. Der Einbrennvorgang wurde 20 Minuten bei 160°C durchgeführt. Die Meßergebnisse (bei -20°C) ergaben, daß mit zunehmender Menge an Siliconelastomer-Partikel mit PMMA-Hülle von 2 Gew% auf 10 Gew% der reverse impact-Wert um 50 % anstieg.

### Beispiel 4:

Ein Epoxidharz-Pulverlack (Basis Araldite, Fa. Ciba Geigy) wurde mit 5 Gew% und 10 Gew% an Siliconpartikeln gemäß Beispiel 1 - 2 vermischt, extrudiert (Extruder: ZSK 25, Fa. Werner & Pfleiderer) und anschließend mit einer Pulverhandpistole (Mars II PL-6, Fa. Böllhofer) auf Metallbleche aufgespritzt. Der Einbrennvorgang wurde 10 Minuten bei 180°C durchgeführt. Die Meßergebnisse. ergaben, daß bei einem Zusatz an Siliconelastomer-Partikel mit PMMA-Hülle von 5 Gew% und 10 Gew% der reverse impact-Wert um 10 % bzw. 40 % zunahm. Gleichzeitig wurde die Steinschlagfestigkeit verbessert.

**Tabelle 1:**

| | | | |
|---|---|---|---|
| | | | |

| | Vergleichsbeispiel 1 | Beispiel 2 | Beispiel 1 |
|---|---|---|---|
| Anteil an Siliconelastomerpulver mit PMMA-Hülle | 0 Gew.-% | 3 Gew.-% | 10 Gew.-% |
| durchschnittliche Lackschichtdicke | 82 µm +- 6 µm | 83 µm +- 4 µm | 80 µm +- 11 µm |
| Pendelhärte nach König | 148 | 146 | 135 |
| Bleistifthärte | 5H | 5H | 5H |
| MEK-Doppelriebe | >200 | >200 | >200 |
| **Reverse Impact in x lbs** | **70** | **80** | **89** |
| T-Bend | 0 | 0 | 0 |

| Salzsprühnebelprüfung nach SS DIN 50 021 Prüfdauer 263 Std. | | | |
|---|---|---|---|
| Gitterschnitt ohne Klebeband | Gt 1 | Gt 1 | Gt 1 |
| Gitterschnitt mit Klebeband | Gt 1 | Gt 1 | Gt 1 |
| Rostgrad nach DIN 53 210 | Rᵢ 3 | Rᵢ 3 | Rᵢ 3 |
| Blasengrad nach DIN 53 209 | nein | nein | nein |
| Rost (Kreuzschnitt) | 3 | 3 | 2 |

| Schwitzwasser-Klima nach SK DIN 50 017 Prüfdauer 640 Std. | | | |
|---|---|---|---|
| **Gitterschnitt ohne Klebeband** | **Gt 4** | **Gt 2** | **Gt 0** |
| **Gitterschnitt mit Klebeband** | **Gt 5** | **Gt 3** | **Gt 0** |

## Patentansprüche

1. Verwendung von vorvernetzten Siliconelastomer-Partikel mit Organopolymerhülle als Formulierungsbestandteil in Pulverlack-Zusammensetzungen auf der Basis von thermoplastischen oder duroplastischen Bindemitteln, wobei die Siliconelastomer-Partikel
a) 5 bis 95 Gew%, bezogen auf das Gesamtgewicht des Copolymerisats, eines Kernpolymeren der allgemeinen Formel (R₂Sio_{2/2})ₓ·(RSiO_{3/2})_{y}·(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl-oder Alkenyl-Reste mit 1 bis 6 C-Atomen, Aryl-Reste oder substituierte Kohlenwasserstoffreste bedeutet.

2. Pulverlack-Zusammensetzungen auf der Basis von thermoplastischen oder duroplastischen Bindemitteln, welche als Formulierungsbestandteil vorvernetzte Siliconelastomer-Partikel mit Organopolymerhülle enthalten, wobei die Siliconelastomer-Partikel
a) 5 bis 95 Gew%, bezogen auf das Gesamtgewicht des Copolymerisats, eines Kernpolymeren der allgemeinen Formel (R₂Sio_{2/2})ₓ·(RSiO_{3/2})_{y}·(SiO_{4/2})_{z} mit x = 5 bis 99.5 Mol%, y = 0.5 bis 95 Mol%, z = 0 bis 30 Mol%, und
b) 5 bis 95 Gew%, bezogen auf das Gesamtgewicht des Copolymerisats, einer Hülle aus Organopolymer ein- oder mehrfach ethylenisch ungesättigter Monomere,
enthalten, und R gleiche oder verschiedene einwertige Alkyl-oder Alkenyl-Reste mit 1 bis 6 C-Atomen, Aryl-Reste oder substituierte Kohlenwasserstoffreste bedeutet.

3. Anspruch 1 oder 2, worin die vorvernetzten Siliconelastomer-Partikel mit Organopolymerhülle
a) 20 bis 80 Gew%, bezogen auf das Copolymer-Gesamtgewicht, eines Kernpolymeren
(R₂SiO_{2/2})ₓ·(RSiO_{3/2})_{y}· (SiO_{4/2})_{z} mit x = 50 bis 99 Mol%, y = 1 bis 50 Mol%; z = 0 bis 20 Mol%; und
b) 20 bis 80 Gew%, bezogen auf das Copolymer-Gesamtgewicht, einer Hülle aus Organopolymer ein- oder mehrfach ethylenisch ungesättigter Monomere,
enthalten, wobei R die obengenannte Bedeutung hat.

4. Anspruch 1 oder 2, worin die vorvernetzten Siliconelastomer-Partikel einen Kern aus (R₂SiO_{2/2})ₓ · (RSiO_{3/2})_{y} mit x = 80 - 99 Mol% und y = 1 - 20 Mol%, wobei R gleich oder verschieden sein kann und die Bedeutung R = Methyl, 3-Methacryloxypropyl hat, und eine Hülle aus Poly-(methylmethacrylat) oder Mischpolymerisat-Hüllen aus Methylmethacrylat und Butylacrylat bzw. Glycidylmethacrylat, enthalten.

5. Anspruch 1 bis 4, worin die vorvernetzten Siliconelastomer-Partikel mit Organopolymerhülle einen mittleren Teilchendurchmesser von 10 bis 300 nm aufweisen.

6. Anspruch 1 bis 5, worin die vorvernetzten Siliconelastomer-Partikel mit Organopolymerhülle eine monomodale Teilchengrößenverteilung mit einem Polydispersitätsindex von maximal σ₂ = 0.2 aufweisen.

7. Anspruch 1 bis 6, worin die vorvernetzten Siliconelastomer-Partikel mit Organopolymerhülle in einer Menge von 0.5 bis 20 Gew%, jeweils bezogen auf das Gesamtgewicht von Siliconelastomer- und Bindemittel-Anteil, in der Pulverlack-Zusammensetzung enthalten sind.

## Claims

1. Use of precrosslinked silicone elastomer particles with an organic-polymer shell as formulation constituent in powder coating compositions based on thermoplastic or thermosetting binders, the silicone elastomer particles comprising
a) from 5 to 95 % by weight, based on the total weight of the copolymer, of a core polymer of the general formula (R₂SiO_{2/2})ₓ·(RSiO_{3/2})_{y}·(SiO_{4/2})= where x = 5 to 99.5 mol%, y = 0.5 to 95 mol%, z = 0 to 30 mol%, and
b) from 5 to 95 % by weight, based on the total weight of the copolymer, of an organic-polymer shell of mono- or polyethylenically unsaturated monomers,
and R denoting identical or different monovalent alkyl or alkenyl radicals having 1 to 6 carbon atoms, aryl radicals or substituted hydrocarbon radicals.

2. Powder coating compositions based on thermoplastic or thermosetting binders which comprise as formulation constituent precrosslinked silicone elastomer particles with an organic-polymer shell, the silicone elastomer particles comprising
a) from 5 to 95 % by weight, based on the total weight of the copolymer, of a core polymer of the general formula (R₂SiO_{2/2})ₓ·(RSiO_{3/2})_{y}·(SiO_{4/2})_{z} where x = 5 to 99.5 mol%, y = 0.5 to 95 mol%, z = 0 to 30 mol%, and
b) from 5 to 95 % by weight, based on the total weight of the copolymer, of an organic-polymer shell of mono- or polyethylenically unsaturated monomers,
and R denoting identical or different monovalent alkyl or alkenyl radicals having 1 to 6 carbon atoms, aryl radicals or substituted hydrocarbon radicals.

3. Claim 1 or 2, in which the precrosslinked silicone elastomer particles with an organic-polymer shell comprise
a) from 20 to 80 % by weight, based on the copolymer total weight, of a core polymer (R₂SiO_{2/2})ₓ·(RSiO_{3/2})_{y}·(SiO_{4/2})_{z} where x = 50 to 99 mol%, y = 1 to 50 mol%, z = 0 to 20 mol%, and
b) from 20 to 80 % by weight, based on the copolymer total weight, of an organic-polymer shell of mono- or polyethylenically unsaturated monomers,
and R being as defined above.

4. Claim 1 or 2, in which the precrosslinked silicone elastomer particles comprise a core comprising (R₂SiO_{2/2})ₓ·(RSiO_{3/2})_{y} where x = 80-99 mol% and y = 1-20 mol%, R being able to be identical or different and having the definition R = methyl, 3-methacryloxypropyl, and with a shell of poly(methyl methacrylate) or copolymer shells of methyl methacrylate and butyl acrylate or glycidyl methacrylate.

5. Claim 1 to 4, in which the precrosslinked silicone elastomer particles with an organic-polymer shell have a mean particle diameter of from 10 to 300 nm.

6. Claim 1 to 5, in which the precrosslinked silicone elastomer particles with an organic-polymer shell have a monomodal particle-size distribution with a maximum polydispersity index of σ₂ = 0.2.

7. Claim 1 to 6, in which the precrosslinked silicone elastomer particles with an organic-polymer shell are present in the powder coating composition in a quantity of from 0.5 to 20 % by weight, based in each case on the total weight of silicone elastomer component and binder component.

## Revendications

1. Utilisation de particules d'élastomère de silicone préréticulée, pourvues d'une enveloppe de polymère organique, comme constituant de formulation dans des compositions de revêtement en poudre à base de liants thermoplastiques ou thermodurcissants, les particules d'élastomère de silicone étant composées
a) de 5 à 95% en poids, sur base du poids total du copolymère, d'un polymère de noyau de formule générale (R₂SiO_{2/2})ₓ·(RSiO_{3/2})_{y}·(SiO_{4/2})_{z}, dans laquelle x = 5 à 99,5% en mole, y = 0,5 à 95% en mole, z = 0 à 30% en mole, et
b) de 5 à 95% en poids, sur base du poids total du copolymère, d'une enveloppe de polymère organique formée de monomères monoéthyléniquement ou polyéthyléniquement insaturés,
et R représentant des radicaux alkyle ou alcényle monovalents identiques ou différents ayant 1 à 6 atomes de carbone, des radicaux aryle ou des radicaux hydrocarbonés substitués.

2. Compositions de revêtement en poudre à base de liants thermoplastiques ou thermodurcissants, comprenant comme constituant de formulation des particules d'élastomère de silicone préréticulée pourvues d'une enveloppe de polymère organique, les particules d'élastomère de silicone étant composées
a) de 5 à 95% en poids, sur base du poids total du copolymère, d'un polymère de noyau de formule générale (R₂SiO_{2/2})ₓ· (RSiO_{3/2})_{y}· (SiO_{4/2})_{z}, dans laquelle x = 5 à 99,5% en mole, y = 0,5 à 95% en mole, z = 0 à 30% en mole, et
b) de 5 à 95% en poids, sur base du poids total du copolymère, d'une enveloppe de polymère organique formée de monomères monoéthyléniquement ou polyéthyléniquement insaturés,
et R représentant des radicaux alkyle ou alcényle monovalents identiques ou différents ayant 1 à 6 atomes de carbone, des radicaux aryle ou des radicaux hydrocarbonés substitués.

3. Revendication 1 ou 2, dans laquelle les particules d'élastomère de silicone préréticulée pourvues d'une enveloppe de polymère organique sont composées
a) de 20 à 80% en poids, sur base du poids total du copolymère, d'un polymère de noyau (R₂SiO_{2/2})ₓ· (RSiO_{3/2})_{y}· (SiO_{4/2})_{z} dans laquelle x = 50 à 99% en mole, y = 1 à 50% en mole, z = 0 à 20% en mole, et
b) de 20 à 80% en poids, sur base du poids total du copolymère, d'une enveloppe de polymère organique formée de monomères monoéthyléniquement ou polyéthyléniquement insaturés,
et R étant comme défini ci-dessus.

4. Revendication 1 ou 2, dans laquelle les particules d'élastomère de silicone préréticulée sont composées d'un noyau composé de (R₂SiO_{2/2})ₓ· (RSiO_{3/2})_{y}, dans lequel x = 80 à 99% en mole et y = 1 à 20% en mole, R pouvant être identique ou différent et ayant la définition R = méthyle, 3-méthacryloxypropyle, et avec une enveloppe de poly(méthacrylate de méthyle) ou avec des enveloppes de copolymère de méthacrylate de méthyle et d'acrylate de butyle ou de méthacrylate de glycidyle.

5. Revendications 1 à 4, dans lesquelles les particules d'élastomère de silicone préréticulée pourvues d'une enveloppe de polymère organique ont un diamètre particulaire moyen de 10 à 300 nm.

6. Revendications 1 à 5, dans lesquelles les particules d'élastomère de silicone préréticulée pourvues d'une enveloppe de polymère organique ont une distribution granulométrique monomodale avec un indice de polydispersité maximal σ₂ = 0,2.

7. Revendications 1 à 6, dans lesquelles les particules d'élastomère de silicone préréticulée pourvues d'une enveloppe de polymère organique sont présentes dans la composition de revêtement en poudre dans une quantité allant de 0,5 à 20% en poids, dans chaque cas sur base du poids total du composant d'élastomère de silicone et du composant liant.
